(19) Europäisches Patentamt European Patent Office Office européen des brevets

(11) **EP 4 481 233 A1**

(12) **EUROPEAN PATENT APPLICATION**

(43) Date of publication:
25.12.2024 Bulletin 2024/52

(21) Application number: 24177433.0

(22) Date of filing: 22.05.2024

(51) International Patent Classification (IPC):
**F16H 7/08** (2006.01) **B65G 23/44** (2006.01)
**F16H 7/12** (2006.01)

(52) Cooperative Patent Classification (CPC):
**F16H 7/12; B65G 23/44; F16H 7/08;**
F16H 2007/088; F16H 2007/0887; F16H 2007/0893;
F16H 2007/0897

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 21.06.2023 CN 202310746217

(71) Applicant: **Intelligrated Headquarters, LLC Mason, OH 45040 (US)**

(72) Inventors:
• **MIAO, Yingbin Charlotte, 28202 (US)**
• **QIU, Yusheng Charlotte, 28202 (US)**
• **WU, Baichuan Charlotte, 28202 (US)**

(74) Representative: **Haseltine Lake Kempner LLP Cheapside House 138 Cheapside London EC2V 6BJ (GB)**

(54) **TENSIONING AND CONVEYOR DEVICES AND METHODS OF USE**

(57) Tensioning devices, methods, and/or the like are provided. In some embodiments, a tensioning device may include a base, wherein the base defines one or more slots; a tensioning roller operably engaged to the base and configured to contact a timing belt, wherein the tensioning roller is disposed through one of the one or more slots; and a weldment configured to be attached to a conveyor device comprising the timing belt, wherein the weldment defines a pivot point about which one or more tension forces acting on the timing belt may be measured.

FIG. 1A

**Description**

**TECHNICAL FIELD**

. The present disclosure relates generally to tensioning devices. In particular, it relates to a tensioning device for use in conveyance systems, such as cross-belt carts.

**BACKGROUND**

. Timing belts may be used for transmission with cross-belt cars, which are driven by external motors. Timing belts may need to be tensioned according to a prescribed value to ensure a higher lifespan and stable, efficient transfer of energy. Further, proper tensioning may be required to ensure the timing belt functions consistently. Direct tensioning (e.g., via a driving pulley) may have poor tensioning consistency, while indirect tensioning (e.g., via a device external to the cross-belt car) may require excess space.

. Through applied effort, ingenuity, and innovation, Applicant has solved problems relating to tensioning devices by developing solutions embodied in the present disclosure, which are described in detail below.

**SUMMARY**

. In general, embodiments of the present disclosure provide a tensioning device, a conveyor device, systems, methods, and/or the like.

. In accordance with various embodiments of the present disclosure, there is provided a tensioning device including a base, wherein the base defines one or more slots; a tensioning roller operably engaged to the base and configured to contact a timing belt, wherein the tensioning roller is disposed through one of the one or more slots; a weldment configured to be attached to a conveyor device including the timing belt, wherein the weldment defines a pivot point about which one or more tension forces acting on the timing belt may be measured.

. In some embodiments, the weldment is an integrated weldment.

. In some embodiments, the weldment is a hexagonal bar.

. In some embodiments, the conveyor device is a cross-belt cart.

. In some embodiments, the tensioning device includes one or more fasteners configured to secure the tensioning roller to the base.

. In some embodiments, the tensioning device includes one or more bearings disposed on a first end and a second end of the tensioning roller.

. In some embodiments, the conveyor device is a cross-belt cart.

. In some embodiments, the conveyor device further includes one or more motors configured to drive the one or more rollers.

. In accordance with various embodiments of the present disclosure, there is provided a tensioning device including a base, wherein the base defines one or more slots; a tensioning roller operably engaged to the base and configured to contact a timing belt, wherein the tensioning roller is disposed through one of the one or more slots; a weldment configured to be attached to a conveyor device includes the timing belt, wherein the weldment defines a pivot point about which one or more tension forces acting on the timing belt may be measured, a conveyor device includes a frame; a track fixedly attached to the frame; one or more rollers configured to drive the track relative to the frame; and a timing belt operably engaged with the one or more rollers, wherein the tensioning device is operably engaged with the conveyor device such that the tensioning roller is operably engaged with the one or more rollers via the timing belt.

. In some embodiments, the weldment is an integrated weldment.

. In some embodiments, the weldment is a hexagonal bar.

. In some embodiments, the conveyor device is a cross-belt cart.

. In some embodiments, the conveyor further includes one or more fasteners configured to secure the tensioning roller to the base.

. In some embodiments, the conveyor device further includes one or more motors configured to drive the one or more rollers.

. According to various embodiments, there is provided a method for tensioning a timing belt, the method including: operably engaging a measurement device with a weldment of a base of a tensioning device; measuring, by the measurement device, a torque of a timing belt of the conveyor device; and adjusting the tension of the timing belt based in part on the measured torque.

. The above summary is provided merely for purposes of summarizing some example embodiments to provide a basic understanding of some embodiments of the disclosure. Accordingly, it will be appreciated that the above-described embodiments are merely examples. It will be appreciated that the scope of the disclosure encompasses many potential embodiments in addition to those here summarized, some of which will be further described below.

**BRIEF DESCRIPTION OF THE SEVERAL VIEWS OF THE DRAWING(S)**

. Having thus described the disclosure in general terms, reference will now be made to the accompanying drawings, which are not necessarily drawn to scale, and wherein:

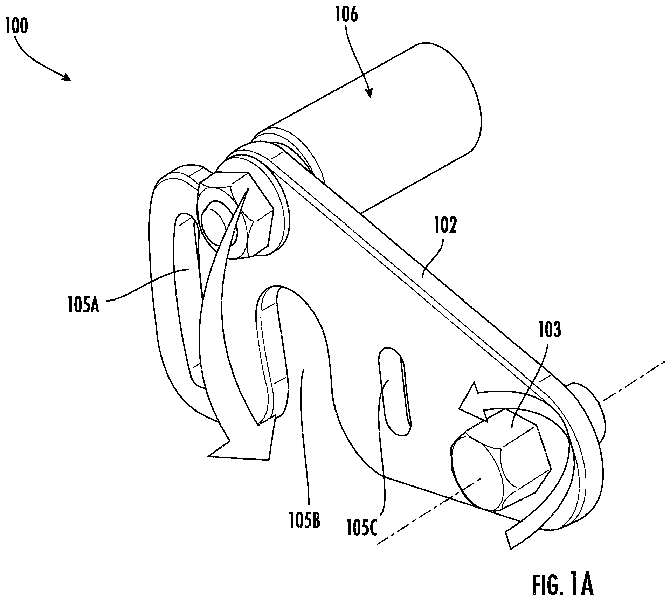

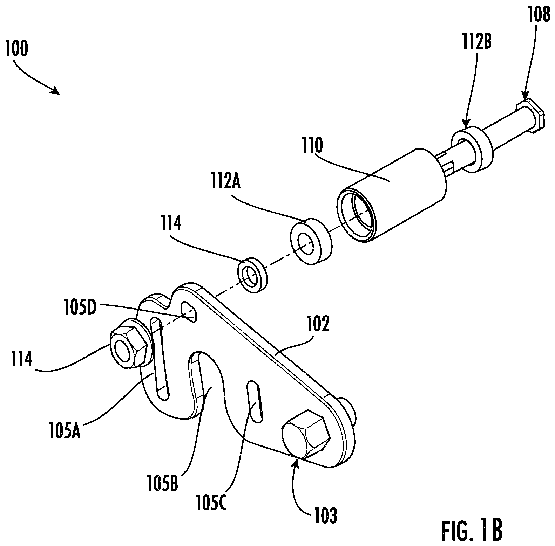

. FIG. 1A is a top angled view of an example tensioning device in accordance with various embodiments of the present disclosure;
. FIG. 1B is a top angled exploded view of an example tensioning device in accordance with various embodiments of the present disclosure;

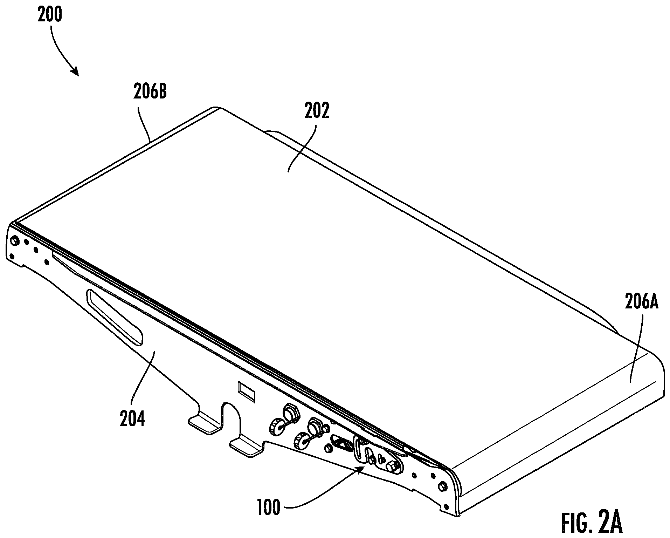

. FIG. 2A is a top angled view of an example conveyor device in accordance with various embodiments of the present disclosure;

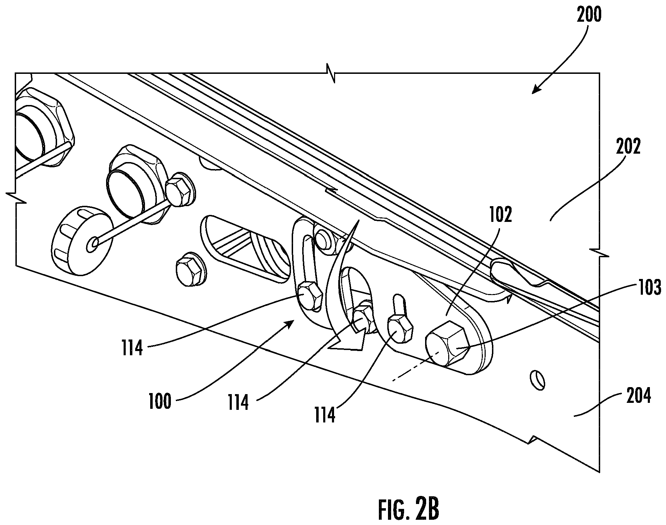

. FIG. 2B is a top angled detail view of an example tensioning device in accordance with various embodiments of the present disclosure;

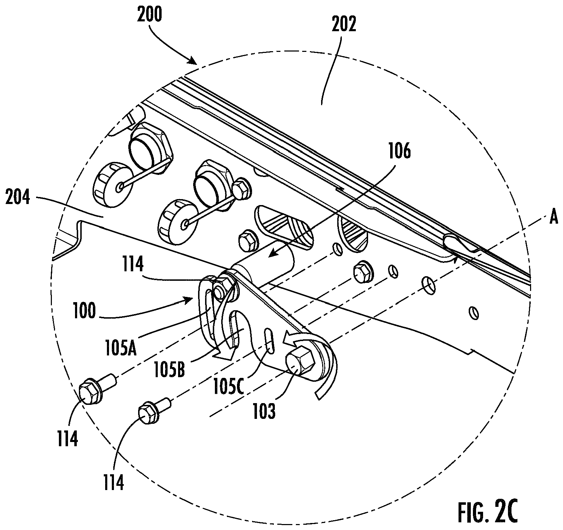

. FIG. 2C is a top angled detail exploded view of an example tensioning device in accordance with various embodiments of the present disclosure;

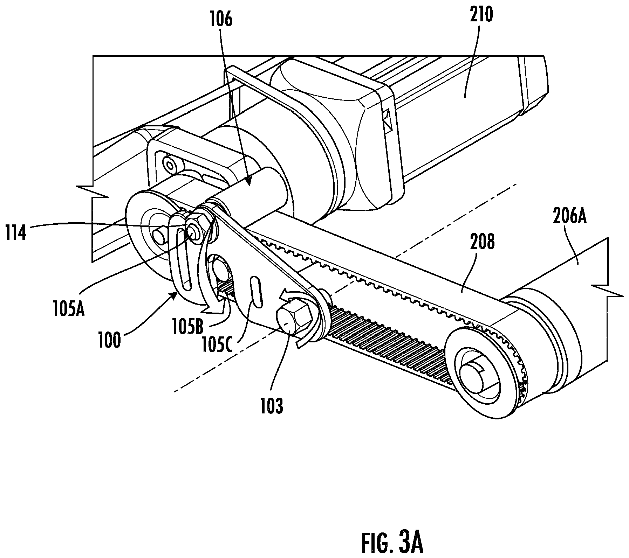

. FIG. 3A is a top angled view of an example tensioning system in accordance with various embodiments of the present disclosure;

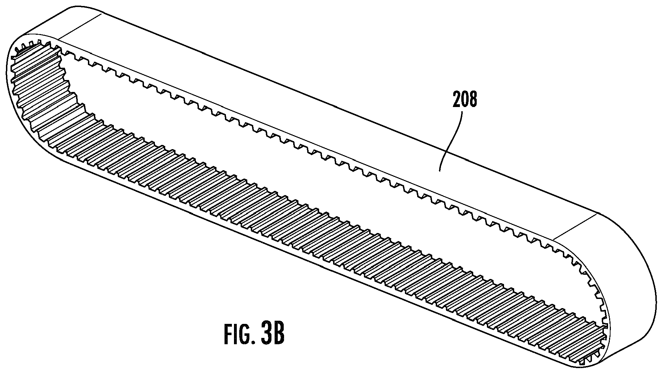

. FIG. 3B is a top angled view of an example timing belt in accordance with various embodiments of the present disclosure;

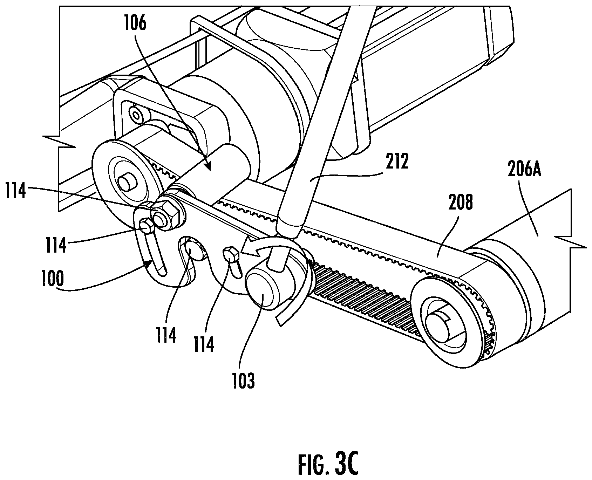

. FIG. 3C is a top angled view of an example tensioning system in accordance with various embodiments of the present disclosure;

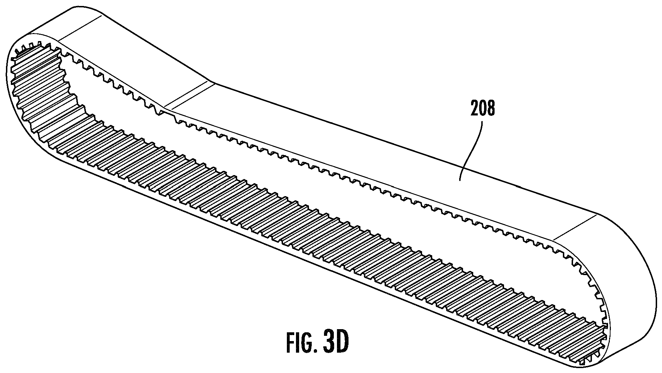

. FIG. 3D is a top angled view of an example timing belt in accordance with various embodiments of the present disclosure;

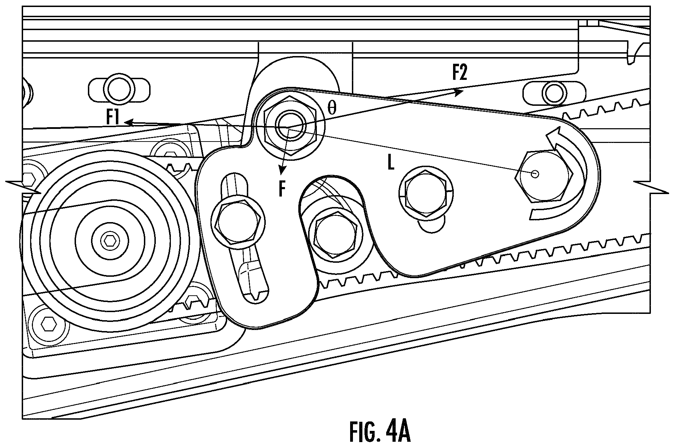

. FIG. 4A is a front view and example force diagram of an example tensioning system in accordance with various embodiments of the present disclosure;

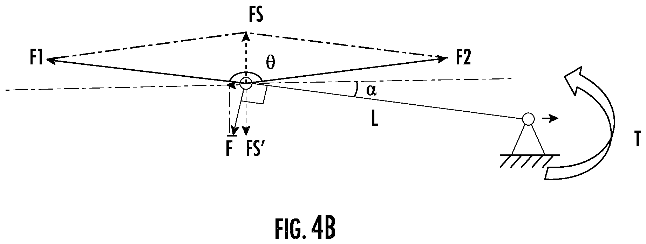

. FIG. 4B is a representative view of an example force diagram of an example tensioning system in accordance with various embodiments of the present disclosure; and

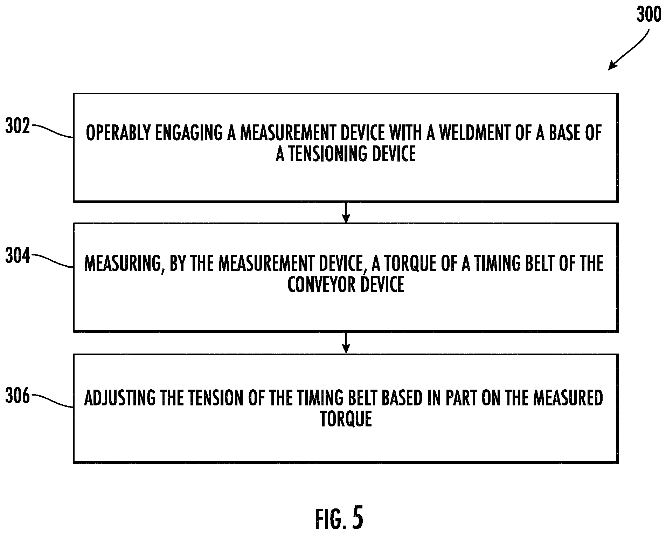

. FIG. 5 is an example flow chart showing an example method of use for an example tensioning system.

## DETAILED DESCRIPTION OF SOME EXAMPLE EMBODIMENTS

. Various embodiments of the present disclosure now will be described more fully hereinafter with reference to the accompanying drawings, in which some, but not all embodiments of the disclosure are shown. Indeed, this disclosure may be embodied in many different forms and should not be construed as limited to the embodiments set forth herein; rather, these embodiments are provided so that this disclosure will satisfy applicable legal requirements. The term "or" (also designated as "/") is used herein in both the alternative and conjunctive sense, unless otherwise indicated. The terms "illustrative" and "exemplary" are used to be examples with no indication of quality level. Like numbers may refer to like elements throughout. The phrases "in one embodiment," "according to one embodiment," and/or the like generally mean that the particular feature, structure, or characteristic following the phrase may be included in at least one embodiment of the present disclosure and may be included in more than one embodiment of the present disclosure (importantly, such phrases do not necessarily may refer to the same embodiment).

Overview

. According to various example embodiments, a tensioning roller and related tensioning device may be used to effectively, efficiently, and conveniently control the tensioning of a timing belt in a conveyance system, such as a cross-belt cart. In some embodiments, the tensioning device may be coupled to the tensioning roller, which may in turn be in contact with an outer surface of the timing belt.

. In some embodiments, the tensioning device may be aligned with one or more components (e.g., a frame) of the conveyance system. In some embodiments, a weldment (e.g., a hexagonal bar) may be inserted into the tensioning device and the one or more components of the conveyance system and may act as a pivot point. In some embodiments, a measurement device (e.g., a torque meter) may operably engage with the weldment and determine a tensioning force of the timing belt. In some embodiments, the tensioning device may then be adjusted as desired based at least in part on the tensioning force detected by the measurement device.

Example Tensioning Devices

. FIG. 1A shows a top-angled view of an example tensioning device 100, and FIG. 1B shows an exploded view of the tensioning device 100, according to various embodiments. In some embodiments, the tensioning device 100 may be attached to a conveyor device 200 (e.g., a cross-belt conveyor), as will be discussed later in this disclosure.

. In some embodiments, the tensioning device 100 may include a base 102. In some embodiments, the base 102 may be a thin, substantially planar, substantially triangular piece. In some embodiments, the base 102 may have rounded corner points. In some embodiments, the base 102 may be flush or otherwise in contact with the conveyor device 200 or a component of the conveyor device 200. In some embodiments, the base 102 may be a single piece configured to conform to the conveyor device 200. In some embodiments, the base 102 may be a substantially metal or plastic component configured to secure one or more components of the conveyor device 200 or of one or more components to the conveyor device 200.

. In some embodiments, the base 102 may include one or more weldments 103, which may be disposed in various locations on the base 102. In some embodiments, the one or more weldments 103 may include one or more integrated bolts, nuts, and/or protrusions that are integrated with the base 102. In some embodiments, the one or more weldments 103 may be a polygonal bar (e.g., a hexagonal bar). In some embodiments, the one or more weldments 103 may be configured to fit into or receive one or more components of the aforementioned conveyor device 200 when the tensioning device 100 is attached to the conveyor. In some embodiments, the one or more weldments 103 may be positioned at one or more pivot points where the tensioning device 100 is attached to the conveyor. In some embodiments, the base 102 may be less than 15 millimeters in width, including the one or more weldments.

. In some embodiments, the base 102 may include one or more slots 105A-D, which may be disposed on or throughout the base 102. In some embodiments, the one or more slots 105A-D may be in the form of holes or cutouts on or within the base 102. In some embodiments, one or more components of the aforementioned conveyor device 200 may be disposed through the one or more slots 105A-D when the tensioning device 100 is attached to the conveyor and may further aid in securing the tensioning device 100 to the conveyor device 200. In some embodiments, the one or more slots 105A-D may be created during the fabrication of the base 102. In some embodiments, the one or more slots 105A-D may be cut out of the base 102 after it has been fabricated.

. In some embodiments, the tensioning device 100 may include a tensioning roller 106. In some embodiments, the tensioning roller 106 may be mounted to the tensioning device 100. In some embodiments, the tensioning roller 106 may be configured to operably engage the tensioning device 100 with the conveyor device 200. In some embodiments, the tensioning roller 106 may be a machined part composed of steel. In some embodiments, the tensioning roller 106 may include one or more internal bearings. In some embodiments, the tensioning roller 106 may have an outer diameter of 20 millimeters and a length of 36 millimeters.

. In some embodiments, and as shown in at least FIG. 1B, the tensioning roller 106 may include a tensioning shaft 108. In some embodiments, the tensioning shaft 108 may be a substantially cylindrical, rigid shaft configured to be rotated axially. In some embodiments, the tensioning shaft 108 may be driven by a motor 210. In some embodiments, the motor 210 may be a component of the conveyor device 200 that may also drive on or more components (e.g., one or more rollers) of the conveyor device 200.

. In some embodiments, the tensioning roller 106 may include a roller tube 110. In some embodiments, the roller tube 110 may be substantially cylindrical and concentric with the tensioning shaft 108. In some embodiments, the tensioning shaft 108 may be inserted into the roller tube 110. In some embodiments, the roller tube 110 may be configured to protect the tensioning shaft 108 and one or more additional components of the tensioning roller 106, as desired.

. In some embodiments, the tensioning roller 106 may include one or more bearings 112A and 112B. In some embodiments, the one or more bearings 112A, 112B may be configured to constrain and/or secure one or more components of the tensioning device 100. In some embodiments, the one or more bearings 112A, 112B may be placed on opposed ends of the tensioning shaft 108. In some embodiments, the one or more bearings 112A, 112B may be disposed on a first and second ends of the tensioning shaft 108. In some embodiments, the one or more bearings 112A, 112B may be configured to secure the tensioning shaft 108 within the roller tube 110 and/or to secure the tensioning shaft 108 to the tensioning device 100 and the conveyor device 200, as desired. In some embodiments, the one or more bearings 112A, 112B may similarly prevent wear and other physical damage to the tensioning shaft 108 and other components of the tensioning device 100.

. In some embodiments, the tensioning device 100 may include one or more fasteners 114. In some embodiments, the one or more fasteners 114 may be configured to operably connect the tensioning shaft 108 to the base 102 of the tensioning device 100. In some embodiments, the one or more fasteners 114 may include one or more bolts, one or more nuts, and/or one or more washers. In some embodiments, the tensioning shaft 108 and/or the one or more fasteners 114 may be secured through the one or more slots 105A-D of the base 102 of the tensioning device 100.

. FIG. 2A shows a top angled view of an example conveyor device 200. In some embodiments, the conveyor device 200 may be configured to support and/or transport one or more objects. In some embodiments, the conveyor device 200 may be used in a warehouse, distribution center, or similar industrial environment.

. In some embodiments, the conveyor device 200 may include a track 202. In some embodiments, the conveyor device 200 may be a cross-belt conveyor and/or a cross-belt cart. In some embodiments, the conveyor device 200 may include a frame 204, to which the track 202 is attached. In some embodiments, the conveyor device 200 may be configured to loop around the frame 204 of the conveyor device 200.

. In some embodiments, the conveyor device 200 may include one or more driving rollers 206A and 206B. In some embodiments, the driving rollers 206A-B may be configured to drive the track 202 of the conveyor device 200 around the frame 204 and thereby support and/or transport one or more objects disposed on the conveyor device 200. In some embodiments, the driving roller 206A-B may be an active roller. In some embodiments, the driving roller 206A-B may be coupled to one or more motors and configured to drive the driving roller 206A-B.

. In some embodiments, the conveyor device 200 may include a timing belt 208. In some embodiments, the timing belt 208 may be of a fixed length with a core layer of glass fiber such that it does not substantially extend or contract during normal operation.

. In some embodiments, and as shown in at least FIG. 2B and 2C, the tensioning device 100 may be attached to the conveyor device 200. In some embodiments, and as shown in at least FIG. 2C, one or more fasteners 114 (e.g., nuts and bolts) may be used to attach the tensioning device 100 to the conveyor device 200. In some embodiments, the tensioning device 100 may be used to determine a tension force of the timing belt 208 of the conveyor. In some embodiments, the point at which the weldment 103 is attached to the conveyor device 200 may define an axis of rotation (indicated by the dashed line) about which the tensioning device 100 may be adjusted, as desired, to properly calibrate the tension of the timing belt 208. In some embodiments, the tensioning device 100 may be adjusted by removing one or more of the fasteners 114, reorienting the tensioning device 100, and then resecuring the tensioning device 100 to the conveyor device 200 via the fasteners 114.

. FIGS. 3A-3D show an example process for adjusting a tensioning device 100 in connection with a conveyor device 200, according to various embodiments. As shown in at least FIG. 3A, the motor 210 is operably engaged with the tensioning roller 106, in some embodiments. The tensioning roller 106 is also in contact with the timing belt 208, in some embodiments. In some embodiments, the timing belt 208 is also coupled to one or more rollers (in this case the roller 206A) of the conveyor device 200. A view of an "unadjusted" timing belt 208 is shown by itself in at least FIG. 3B. In some embodiments, a measurement device 212, as shown in at least FIG. 3C, may be used to measure the tension of the timing belt 208. In some embodiments, the measurement device 310 may be a torque meter. In some embodiments, the measurement device 212 may be operably engaged with one or more of the weldments 103 of the tensioning device 100 and thereby used to measure a tension in the timing belt 208. In some embodiments, once the tension is measured, the timing belt 208 may be adjusted as necessary until a desired tensioning is achieved.

. As shown in FIG. 4A, the tension may also be calculated using the force diagram shown in connection with the tensioning device 100 that has been secured to the conveyor device 200. As shown in the diagram, the required tension of the timing belt 208 may be measured by F1, which is equal to F2. The tensioning force may be calculated using the angle θ and the distance L between the fastener 114B and the weldment 103. An expanded diagram is shown in FIG. 4B. In some embodiments, the torque T may be calculated by first calculating Fs as twice F1 (or F2) multiplied by the cosine of half the angle θ; that is:

$$F_s = 2 \; x \; F_1 \; x \; \cos\left(\frac{\theta}{2}\right).$$

. In some embodiments, the second step to calculating the torque T may be calculated by dividing Fs by cosine of the angle α and then multiplying the quotient by the distance L; that is:

$$T = (F_s \div cos\alpha) \; x \; L.$$

Example Methods of Use

. FIG. 5 shows an example flow chart illustrating an example method 300 of use for an example tensioning device for use with an example conveyance system. In some embodiments, the example tensioning device and conveyance system may be the tensioning device and conveyance system as previously described. However, it will be understood that the method 300 may be used with any suitable devices and systems, as desired.

. In some embodiments, the method 300 may include a step 302 of operably engaging a measurement device with a weldment of a base of a tensioning device attached to a conveyor device. In some embodiments, the method 300 may include a step 304 of measuring, by the measurement device, a torque of a timing belt of the conveyor device. In some embodiments, the method 300 may include a step 306 of adjusting the tension of the timing belt based in part on the measured torque.

. Many modifications and other embodiments of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1.  A tensioning device comprising:

    a base,
    wherein the base defines one or more slots;
    a tensioning roller operably engaged to the base and configured to contact a timing belt, wherein the tensioning roller is disposed through one of the one or more slots; and
    a weldment configured to be attached to a conveyor device comprising the timing belt, wherein the weldment defines a pivot point about which one or more tension forces acting on the timing belt may be measured.

2.  The tensioning device of claim 1, wherein the weldment is an integrated weldment.

3.  The tensioning device of claim 2, wherein the weldment is a hexagonal bar.

4.  The tensioning device of claim 1, wherein the conveyor device is a cross-belt cart.

**5.** The tensioning device of claim 1, further comprising one or more fasteners configured to secure the tensioning roller to the base.

**6.** The tensioning device of claim 1, further comprising one or more bearings disposed on a first end and a second end of the tensioning roller.

**7.** The tensioning device of claim 1, wherein the conveyor device is a cross-belt cart.

**8.** The tensioning device of claim 7, wherein the conveyor device further comprises one or more motors configured to drive the one or more rollers.

**9.** A system comprising:

a tensioning device comprising:

a base,
wherein the base defines one or more slots;
a tensioning roller operably engaged to the base and configured to contact a timing belt, wherein the tensioning roller is disposed through one of the one or more slots;
a weldment configured to be attached to a conveyor device comprising the timing belt, wherein the weldment defines a pivot point about which one or more tension forces acting on the timing belt may be measured.

a conveyor device comprising:

a frame;
a track fixedly attached to the frame;
one or more rollers configured to drive the track relative to the frame; and a timing belt operably engaged with the one or more rollers,
wherein the tensioning device is operably engaged with the conveyor device such that the tensioning roller is operably engaged with the one or more rollers via the timing belt.

**10.** The system of claim 9, wherein the weldment is an integrated weldment.

**11.** The system of claim 10, wherein the weldment is a hexagonal bar.

**12.** The system of claim 9, wherein the conveyor device is a cross-belt cart.

**13.** The system of claim 9, wherein the tensioning device further comprises one or more fasteners configured to secure the tensioning roller to the base.

**14.** The system of claim 9, wherein the conveyor device further comprises one or more motors configured to drive the one or more rollers.

**15.** A method for tensioning a timing belt, the method comprising:

operably engaging a measurement device with a weldment of a base of a tensioning device;
measuring, by the measurement device, a torque of a timing belt of the conveyor device; and
adjusting the tension of the timing belt based in part on the measured torque.

FIG. 1A

FIG. 1B

FIG. 2A

FIG. 2B

FIG. 2C

FIG. 3A

FIG. 3B

FIG. 3C

FIG. 3D

FIG. 4A

FIG. 4B

300

302 OPERABLY ENGAGING A MEASUREMENT DEVICE WITH A WELDMENT OF A BASE OF A TENSIONING DEVICE

304 MEASURING, BY THE MEASUREMENT DEVICE, A TORQUE OF A TIMING BELT OF THE CONVEYOR DEVICE

306 ADJUSTING THE TENSION OF THE TIMING BELT BASED IN PART ON THE MEASURED TORQUE

FIG. 5

Europäisches
Patentamt
European
Patent Office
Office européen
des brevets

# EUROPEAN SEARCH REPORT

**Application Number**

EP 24 17 7433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/355246 A1 (VEGH MARK KENNETH [US] ET AL) 12 November 2020 (2020-11-12) * paragraph [0076]; figures 1-6 * ----- | 1-14 | INV. F16H7/08 B65G23/44 F16H7/12 |
| Y | US 5 389 045 A (LYONS SCOTT F [US]) 14 February 1995 (1995-02-14) * column 2, lines 50-55; figures 2,3 * ----- | 1-5,7-15 | |
| Y | US 2013/255580 A1 (CHELLBERG PAUL M [US] ET AL) 3 October 2013 (2013-10-03) * figure 2 * ----- | 6 | |
| A | US 10 724 911 B1 (LAWSON BRADLEY [AU]) 28 July 2020 (2020-07-28) * figure 5 * ----- | 1-15 | |
| A | US 11 535 455 B1 (ERTEL DANIEL E [US]) 27 December 2022 (2022-12-27) * the whole document * ----- | 1-15 | |
| Y | CN 112 728 026 A (GREE ELECTRIC APPLIANCES INC ZHUHAI) 30 April 2021 (2021-04-30) * figures 1-3 * ----- | 15 | TECHNICAL FIELDS SEARCHED (IPC) F16H B65G |
| A | US 2017/174441 A1 (STRATHAUS MICHAEL SCHULTE [DE]) 22 June 2017 (2017-06-22) * the whole document * ----- | 1-15 | |

The present search report has been drawn up for all claims

| Place of search | Date of completion of the search | Examiner |
|---|---|---|
| Munich | 20 September 2024 | Hassiotis, Vasilis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 7433

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | | Publication date | Patent family member(s) | | Publication date |
|---|---|---|---|---|---|
| US 2020355246 A1 | | 12-11-2020 | CN | 111908038 A | 10-11-2020 |
| | | | EP | 3736468 A1 | 11-11-2020 |
| | | | US | 2020355246 A1 | 12-11-2020 |
| US 5389045 A | | 14-02-1995 | NONE | | |
| US 2013255580 A1 | | 03-10-2013 | US | 2013255580 A1 | 03-10-2013 |
| | | | US | 2014076238 A1 | 20-03-2014 |
| US 10724911 B1 | | 28-07-2020 | NONE | | |
| US 11535455 B1 | | 27-12-2022 | EP | 4129869 A1 | 08-02-2023 |
| | | | US | 11535455 B1 | 27-12-2022 |
| CN 112728026 A | | 30-04-2021 | NONE | | |
| US 2017174441 A1 | | 22-06-2017 | AU | 2015303493 A1 | 02-02-2017 |
| | | | CN | 106573735 A | 19-04-2017 |
| | | | DE | 202014007229 U1 | 01-07-2015 |
| | | | EP | 3180278 A1 | 21-06-2017 |
| | | | PL | 3180278 T3 | 28-06-2019 |
| | | | US | 2017174441 A1 | 22-06-2017 |
| | | | WO | 2016023604 A1 | 18-02-2016 |

EPO FORM P0459

For more details about this annex : see Official Journal of the European Patent Office, No. 12/82